Europäisches Patentamt

European Patent Office

Office européen des brevets

(19)

(11) Veröffentlichungsnummer: **0 005 699**
**B1**

(12) **EUROPÄISCHE PATENTSCHRIFT**

(21) Anmeldenummer: **78100080.7**

(22) Anmeldetag: **01.06.78**

(51) Int. Cl.³: **A 47 J 37/07, C 04 B 21/08**

(54) **Grilltisch, insbesondere für die Benutzung im Freien.**

(43) Veröffentlichungstag der Anmeldung:
**12.12.79 Patentblatt 79/25**

(45) Bekanntmachung des Hinweises auf die Patenterteilung:
**04.02.81 Patentblatt 81/5**

(84) Benannte Vertragsstaaten:
**CH DE FR GB**

(56) Entgegenhaltungen:
**DE - A - 2 507 302**
**DE - A - 2 638 748**
**DE - B - 2 120 775**
**DE - U - 7 404 217**
**DE - U - 7 413 234**
**FR - A - 2 288 504**
**US - A - 2 793 957**
**P. CORMON "Bétons légers d'aujourd'hui", 1973**
**Editions Eyroles, 61, Boulevard Saint Germain,**
**Paris Seite 124**

(73) Patentinhaber: **Rosenthal Aktiengesellschaft**
**D-8672 Selb/Bayern (DE)**

(72) Erfinder: **Streim, Otto**
**Adolf-Kolping-Strasse 3**
**D-8640 Kronach (DE)**

(74) Vertreter: **Dost, Wolfgang, Dr. rer. nat. Dipl.-**
**Chem. et al,**
**Patentanwälte Dost & Altenburg Galileiplatz 1**
**D-8000 München 80 (DE)**

**0 005 699**

Grilltisch, insbesondere für die Benutzung im Freien

Die Erfindung betrifft einen Grilltisch mit einem als Hohlzylinder ausgebildeten zentralen Tischbein und einer auf dem oberen Rand des Hohlzylinders aufliegenden, vorzugsweise runden Tischplatte, die eine zentrale Bohrung aufweist, in die eine in den Innenraum des Tischbeins hineinragende Grilleinheit mit Aschetopf, Feuerrost und Grillrost einsetzbar ist, und die aus einem Tischplattenunterteil und aus auf diesem Tischplattenunterteil befestigten Keramikplatten besteht.

Ein solcher Grilltisch ist z.B. aus dem deutschen Gebrauchsmuster 7 404 217 bekannt geworden. Solche Grilltische sollen vorzugsweise im Freien verwendet werden, und es ist wünschenswert, daß diese Grilltische auch längere Zeit im Freien stehen bleiben können. Daraus ergibt sich das Problem der Witterungsbeständigkeit sowie der Hitzebeständigkeit, insbesondere für die Tischplatte.

Aufgabe der vorliegenden Erfindung ist es deshalb, einen Grilltisch der eingangs genannten Gattung so auszubilden, daß er trotz großer Witterungsbeständigkeit ausreichend hitzebeständig ist.

Zur Lösung dieser Aufgabe wird erfindungsgemäß vorgeschlagen, daß das Tischplattenunterteil aus einem Baustoff folgender Zusammensetzung besteht:

a) etwa 50 bis 58 Gew.-% Blähton mit unterschiedlicher Korngröße zwischen 0 und etwa 8 mm,
b) 26 bis 30 Gew.-% Zement und
c) 13 bis 18 Gew.-% Wasser und daß die Keramikplatten aus einer Keramikmasse folgender Zusammensetzung bestehen:

a) 45 bis 65 Gew.-% Schamotte, 0 bis 1 mm Körnung
b)  0 bis  6 Gew.-% Tonerde, calciniert
c) 10 bis 20 Gew.-% Walmeroder Ton, fein gemahlen
d) 10 bis 20 Gew.-% geschlämmter Kaolin
e)  0 bis 1,5 Gew.-% Flußmittel.

Die erfindungsgemäßen Materialien für das Tischplattenunterteil und die Keramikplatten machen die Tischplatte gleichzeitig äußerst witterungs- und hitzebeständig.

Der für das Tischplattenunterteil verwendete Baustoff ist an sich bekannt (z.B. deutsche Auslegeschrift 2 120 775).

Der Blähton des Baustoffs für das Tischplattenunterteil wird aus Naturton durch Mahlen, Trocknen, Granulieren und Brennen im Drehrohrofen bei Temperaturen, z.B. über 1200°C, hergestellt. Nach Maßgabe des verwendeten Ausgangstons kann sich die Rezeptur innerhalb der angegebenen Grenzen etwas ändern. Bei Verwendung eines Blähtons, der aus Naturton der in Tab. I angegebenen Zusammensetzung und Brennen bis 1250 bis 1300°C hergestellt worden ist, ergeben sich die aus Tab. II ersichtlichen Rezepturen in Gewichtsprozent, die sich auf eine Frischbetonrohdichte von etwa 1300 kg/m³ beziehen.

*Tab. I. Zusammensetzung des Ausgangstons*

|  | Gew.-% |
|---|---|
| $SiO_2$ | 54 bis 59 |
| $Al_2O_3$ | 23 bis 26 |
| $Fe_2O_3$ | 6 bis 8 |
| $CaO+MgO$ | 3 bis 8 |
| $SO_3$ | 0 bis 1 |
| S | max. 1 |
| $K_2O$ | 1 bis 3 |
| $Na_2O$ | max. 1 |

2

### Tab. II. Rezepturen in Gew.-%

| | Allgemeine Dosierung | Bevorzugte Dosierung | Besondere bevorzugte Dosierung |
|---|---|---|---|
| Blähton, Körnung 4/8 mm | 24 bis 28 | 25 bis 27 | 26,4 |
| Blähton, Körnung 0/4 mm | 26 bis 30 | 28 bis 30 | 29,3 |
| Zement PZ 450F | 26 bis 30 | 28 bis 30 | 28,9 |
| Wasser | 13 bis 18 | 14 bis 16 | 15,4 |

Als Zement finden die üblicherweise bei der Betonherstellung verwendeten Zementarten, vorzugsweise Portlandzement, Verwendung.

Bei einer besonders bevorzugten Ausführungsform der Erfindung hat der Baustoff, aus dem der Tischplattenunterteil hergestellt ist, folgende Zusammensetzung:

a) 26,4 Gew.-% Blähton der Korngröße 4 bis 8 mm
b) 29,3 Gew.-% Blähton der Korngröße 0 bis 4 mm
c) 28,9 Gew.-% Portlandzement 450 F DIN 1164
d) 15,4 Gew.-% Wasser.

Es hat sich gezeigt, daß bei exakter Einhaltung dieser Zusammensetzung die höchste Hitzebeständigkeit erzielbar ist.

Um die Festigkeit der Tischplatte zu erhöhen, insbesondere dann, wenn es sich um eine Platte mit Durchmessern von einem Meter und mehr handelt, ist es vorteilhaft, das Tischplattenunterteil mit einer Stahlarmierung zu versehen.

Als witterungsbeständige Deckschicht auf dem Tischplattenunterteil eignen sich in besonderer Weise Keramikplatten, die auf dem Tischplattenunterteil aufgeklebt werden und vorzugsweise frostsicher gebrannt und glasiert sind.

In weiterer Ausbildung der Erfindung werden für die Keramikplatten Keramikmassen der in Tab. III angegebenen speziellen Rezepturen vorgeschlagen:

### Tab. III.

| | Rezeptur, Gew.-% | |
|---|---|---|
| | I. | II. |
| Schamotte, 0 bis 1 mm Körnung | 60,0 | 62,6 |
| Tonerde, calciniert | 2,4 | 4,8 |
| Walmeroder Ton, feingemahlen (halbfett, weißbrennend) | 14,6 | 16,3 |
| geschlämmter Kaolin | 13,0 | 16,3 |
| Flußmittel | 10,0 | |

Bei (I) ist der Tonerdgehalt reduziert, jedoch macht dies die Verwendung von Flußmittel erforderlich. Hierdurch kann die Brenntemperatur erniedrigt werden. Die besonders bevorzugte Rezeptur ist aus (II) ersichtlich.

Der Kaolin besteht z.B. aus 94 Prozent Tonsubstanz, 4 Prozent Quarz und 2 Prozent Wasser.

Desweiteren können solche Segmentteile aus steingutähnlichem Material durch Gießen, Pressen oder Drehen hergestellt werden. Dieser Werkstoff eignet sich besonders zur Herstellung von Reliefplatten für die Oberfläche des Grilltisches.

Eine besonders hitze- und witterungsbeständige Füllmasse für die Fugen zwischen den Keramikplatten besteht aus

2 Gewichtsteilen Portlandzement,
1 Gewichtsteil Schmelzzement,
3 Gewichtsteilen Wasser und
1 Gewichtsteil bauchemischer Emulsion.

Als Portlandzement wird vorzugsweise PZ 450 F verwendet.

Bei der bauchemischen Emulsion handelt es sich z.B. um eine übliche Baumörtel-Emulsion auf Kunststoffbasis, die zur Herstellung geschmeidiger Putzmörtel geeignet ist.

Schließlich ist es vorteilhaft, für die zentrale Bohrung der Tischplatte eine Abdeckplatte vorzusehen, die aus demselben keramikwerkstoff wie die Keramikplatten besteht, um damit die üblicherweise aus Eisen bestehenden Teile der Grilleinheit vor Witterungseinflüssen und vor Rost zu schützen.

Um die gute Transportierbarkeit der Tischplatte in großem Umfang ausnutzen zu können, wird weiterhin vorgeschlagen, daß das als Hohlzylinder ausgebildete Tischbein aus mehreren, zentrisch aufeinandergesetzten Ringen aufgebaut ist. Dadurch wird auch dieser Teil des Grilltisches leicht transportierbar, obwohl er als Ganzes reltiv schwer sein muß, um eine gute Standfestigkeit des Grilltisches zu gewährleisten. Deshalb bestehen die einzelnen Ringe vorzugsweise aus Beton.

Bei der Herstellung des Tischplattenunterteils wird der gut durchgemischte Baustoff in eine Form eingestampft, an der Oberfläche geglättet und danach getrocknet. Dieses Herstellungsverfahren hat den Vorteil großer Einfachheit und verlangt insbesondere keine aufwendigen Vorrichtungen oder Werkzeuge.

Die Herstellung der Keramikplatten für die Tischplatte geschieht folgendermaßen:

a) die Keramikmasse wird in einem Knetmischer aufbereitet

b) die Keramikmasse wird in eine Form mit einer Bodenplatte aus Gips und einem Holzrahmen eingeformt

c) die eingeformte Masse wird in der Form geglättet

d) nach mehreren Stunden Wartezeit wird der Formling in der Form gewendet

e) der Formling wird bei 900°C geglüht

f) die Keramikplatte wird mit Dekor versehen

g) auf die Keramikplatte wird eine Porzellanglasur aufgebracht und sie wird bei 1400°C reduzierend gebrannt.

Weitere Einzelheiten des erfindungsgemäßen Grilltisches werden im Rahmen der Erläuterung eines Ausführungsbeispiels anhand der beigefügten Zeichnungen beschrieben.

In den Zeichnungen zeigt

Fig. 1 einen Grilltisch mit einer ringförmigen Tischplatte in Schrägansicht von oben,

Fig. 2 eine Draufsicht auf den Grilltisch gemäß Pfeilrichtung II in Fig. 1 mit einer eingesetzten Abdeckplatte,

Fig. 3a und 3b Draufsicht und Querschnitt durch eine Form zur Herstellung eines Tischplattenunterteils für die ringförmige Tischplatte gemäß Fig. 1,

Fig. 4 einen Querschnitt durch den oberen Teil eines Grilltisches gemäß Fig. 1 mit eingesetzter Grilleinheit und abgehobener Abdeckplatte,

Fig. 5 eine Seitenansicht der axial auseinandergezogenen Einzelteile des Tischbeines des Grilltisches gemäß Fig. 1,

Fig. 6a und 6b eine Form zur Herstellung von Keramikplatten für die Tischplatte des Grilltisches gemäß Fig. 1 in Draufsicht und im Querschnitt und

Fig. 7a und 7b Draufsicht und Querschnitt einer Form für die Herstellung einer Abdeckplatte für den Grilltisch.

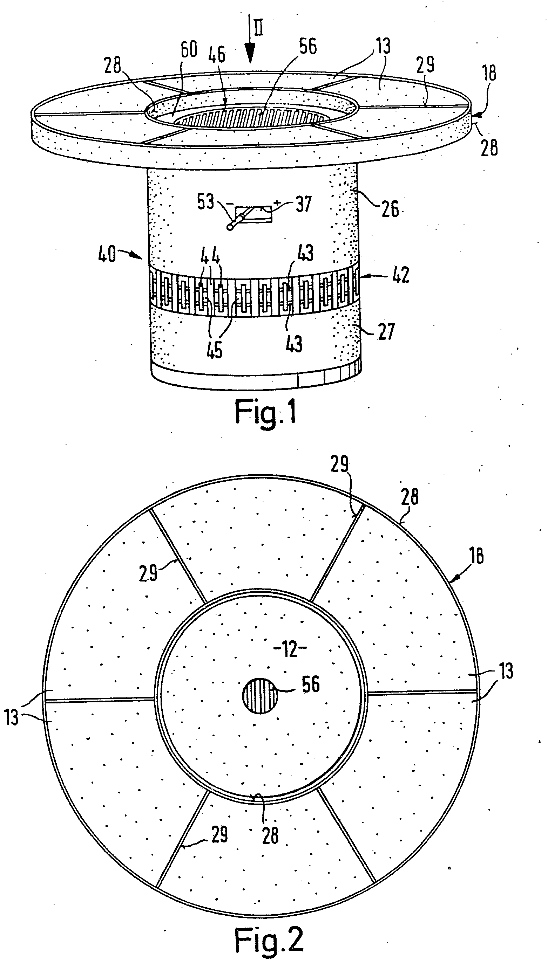

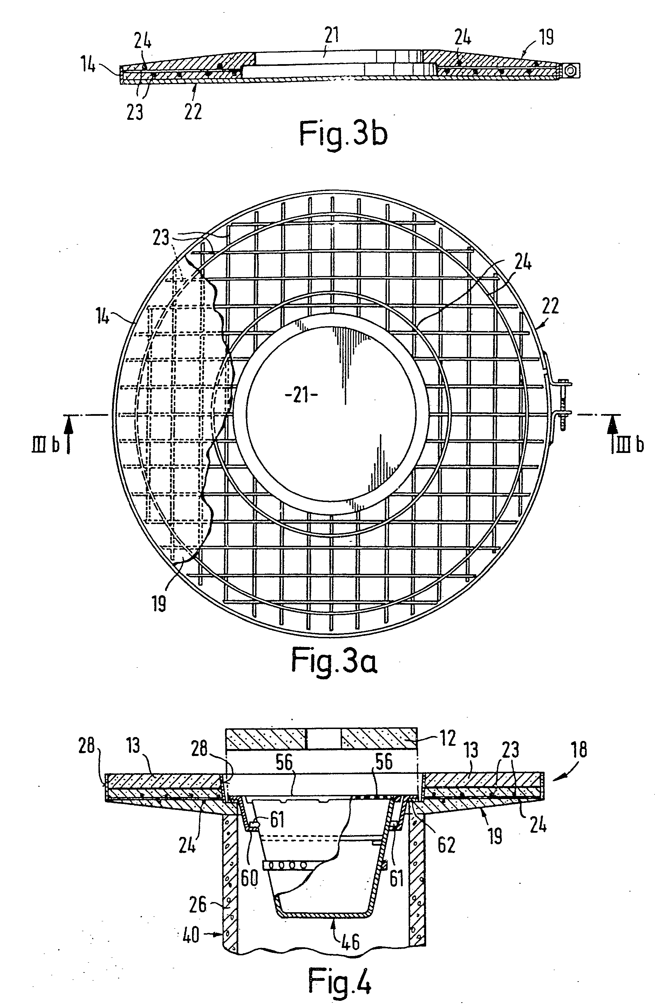

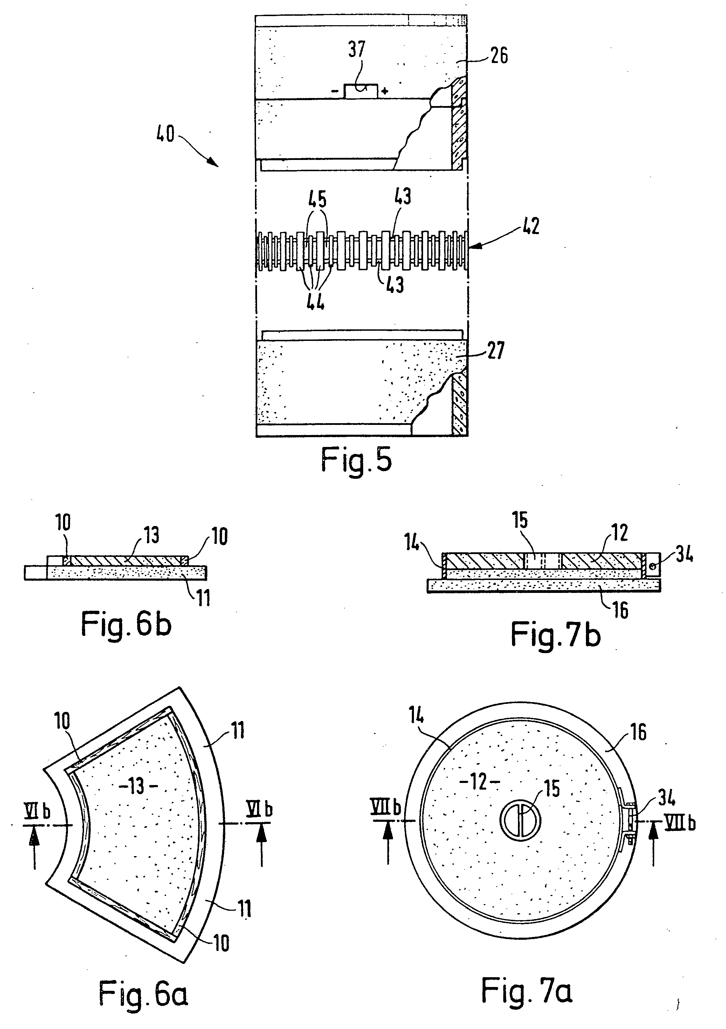

Bei dem in Fig. 1 im Schrägbild dargestellten Grilltisch ist ein die Form eines Hohlzylinders aufweisendes zentrales Tischbein mit 40 bezeichnet. Auf dem oberen Rand dieses Tischbeines ruht eine kreisringförmige Tischplatte 18, in deren zentraler Bohrung eine in ihrer Gesamtheit mit 46 bezeichnete Grilleinheit eingesetzt ist, die in den Innenraum des Tischbeins 40 nach unten hineinragt (vergleiche Fig. 4). Von dieser Grilleinheit 46 ist in Fig. 1 nur ein Grillrost 56, der diese Einheit nach oben abschließt, zu sehen. Die Grilleinheit 46 hängt an Radialzapfen 61 in einem Einsatzring 60, der in einem Bund der Zentralbohrung der Tischplatte 18 zentriert ist. Zwischen dem vorzugsweise aus Metall bestehenden Einsatzring 60 und dem Bund der Tischplatte 18 ist zur Wärmeisolierung ein Asbestring 62 eingelegt. Die Oberseite der Tischplatte 18 ist durch Radialfugen 29 in sechs Ringsektoren aufgeteilt, die in ihrer Gänze jeweils Keramikplatten 13 sind, die die Oberseite der Tischplatte 18 bilden. Diese Keramikplatten 13 sind auf einen ringförmigen Tischplattenunterteil 19 (vergleiche Fig. 4) aufgeklebt. Das zylindrische Tischbein 40 besteht aus einem unteren Betonring 27, einem oberen Betonring 26 und einem zwischen diesen beiden Ringen angeordneten Metallring 42, der die Verbindung zwischen diesen beiden Betonringen 26, 27 herstellt. Der obere Betonring 26 kann nochmals in zwei Teilringe unterteilt sein. Dieser obere Betonring 26 weist eine Durchbrechung 37 auf, durch die ein Zugregler 53 nach außen geführt ist, der zur Steuerung der der Grilleinheit 46 zugeführten Zugluft dient. Der Metallring 42 weist mehrere über seinen Umfang verteilte Durchbrechungen 45 auf, die der Zuführung von Zugluft in das Innere des zylinderförmigen Tischbeines 40 dienen. Der Metallring 42 kann in der Weise ausgebildet sein, daß er aus zwei tragenden Metallringen 43 besteht, die an ihrem Außenumfang mit vertikal ausgerichteten Metalllamellen 44 versehen sind. Die Durchbrechungen entstehen dann als Zwischenräume zwischen den metallamellen 44 (vergleiche Fig. 5). Die Betonringe 26 und 27 können an ihren Stirnkanten und insbesondere an ihren Zentrierfugen ebenfalls mit Metallringen versehen sein.

Das Tischplattenunterteil 19 besteht aus Kunststein, der aus Baustoff der im allgemeinen Teil der Beschreibung angegebenen Zusammensetzung hergestellt ist. Die Herstellung des Tischplattenunterteils 19 erfolgt mit Hilfe der in Fig. 3a und 3b gezeigten Form 22. In diese Form 22 wird zentrisch ein Kern 21 eingelegt und danach eine aus Baustahlgewebe 23 und Bewehrungsringen 24 bestehende Stahlarmierung. Danach wird die Baustoffmasse, die aus Blähton, Zement und Wasser besteht in die

**0 005 699**

Form eingestampft und an ihrer Oberfläche geglättet. Um das fertige Tischplattenunterteil 19 zu erhalten, braucht der Formling nur noch getrocknet zu werden. Nach dem Trocknen werden auf das Tischplattenunterteil 19 mittels eines Universalklebers, z.B. eines hochwertigen Kontaktklebers auf Polychloroprenbasis, die Keramikplatten 13 aufgeklebt. Es werden danach die Fugen 29 (vergleich Fig. 2) mit einer Füllmasse aus einer Mischung von Normalzement, Schmelzzement, Wasser und bauchemische Emulsion ausgegossen. Die so entstandene Tischplatte 18 wird dann noch an ihrer äußeren und inneren Umfangsfläche mit einer Verputzschicht 28 (vergleiche Fig. 4) versehen. Hierzu wird vorzugsweise ein Putz folgender Zusammensetzung verwendet.

*Gewichtsteile*

|  | Portlandzement | Quarzmehl | Quarzsand |
|---|---|---|---|
| 1. Schicht | 1 | 1,5 | 1,5 |
| 2. Schicht | 1 | 3 | |

In Fig. 6a und 6b ist eine Form zur Herstellung einer ringsektorförmigen Keramikplatte 13 gezeigt. Diese Form besteht im wesentlichen aus einer Bodenplatte 11 aus Gips und einem daraufliegenden, die Kontur der herzustellenden Keramikplatte aufweisenden Holzrahmen 10. Die Keramikmasse aus Schamotte, Tonerde, Ton und Kaolin wird in einem Knetmischer hergestellt und mit der Hand in den Holzrahmen 10 eingeformt. Danach wird mit einer Metallschiene abgezogen und mit einem Filzbrett verrieben. Anschließend erfolgt eine Glättung der Oberfläche. Die Bodenplatte 11 entzieht der Keramikmasse die Feuchtigkeit, weshalb sich der Holzrahmen 10 nach etwa zwei Stunden abnehmen läßt. Nach etwa weiteren fünf Stunden wird der Formling der Keramikplatte 13 auf der Bodenplatte 11 umgedreht, damit die spätere Oberseite plan aufliegt und sich nicht mehr verzieht.

In ähnlicher Weise erfolgt die Herstellung der Abdeckplatte 12, wie es in Fig. 7a und 7b gezeigt ist. Die Form für die Abdeckplatte 12 besteht aus einer Bodenplatte 16 aus Gips und einem Metallring 14, der um den Formdurchmesser der Bodenplatte 16 herumgelegt und mittels einer Verschraubung 34 verspannt ist. Ins Zentrum der Form für die Abdeckplatte 12 wird eine Lochform 15 eingelegt, um das zentrale Griffloch in der Abdeckplatte 12 frei zu lassen. Danach wird in gleicher Weise, wie bei der Herstellung der Keramikplatten keramikmasse in die Form gegeben. Die Wärmebehandlung der getrockneten Formlinge ist für die Keramikplatten und für die Abdeckplatte in beiden Fällen die gleiche und ist weiter oben bereits beschrieben worden.

Die erfindungsgemäße Ausführung eines Grilltisches und die angegebenen Verfahren zu seiner Herstellung sind nicht auf die beschriebene ringförmige Tischplattenform beschränkt. Vielmehr kann sowohl die äußere als auch die innere Kontur der Tischplatte polygonal oder oval sein.

**Patentansprüche**

1. Grilltisch mit einem als Hohlzylinder ausgebildeten zentrallen Tischbein und einer auf dem oberen Rand des Hohlzylinders aufliegenden, vorzugsweise runden Tischplatte, die eine zentrale Bohrung aufweist, in die eine in den Innenraum des Tischbeins hineinragende Grilleinheit mit Aschetopf, Feuerrost und Grillrost einsetzbar ist, und die aus einem Tischplattenunterteil und aus auf diesem Tischplattenunterteil befestigten Keramikplatten besteht, dadurch gekennzeichnet, daß das Tischplattenunterteil (19) aus einem Baustoff folgender Zusammensetzung besteht:
   a) etwa 50 bis 58 Gew.-% Blähton mit unterschiedlicher Korngröße zwischen 0 und etwa 8 mm,
   b) 26 bis 30 Gew.-% Zement und
   c) 13 bis 18 Gew.-% Wasser
   und daß die Keramikplatten (13) aus einer Keramikmasse folgender Zusammensetzung bestehen:
   a) 45 bis 65 Gew.-% Schamotte, 0 bis 1 mm Körnung
   b) 0 bis 6 Gew.-% Tonerde, calciniert
   c) 10 bis 20 Gew.-% Walmeroder Ton, fein gemahlen
   d) 10 bis 20 Gew.-% geschlämmter Kaolin
   e) 0 bis 1,5 Gew.-% Flußmittel
2. Grilltisch nach Anspruch 1, dadurch gekennzeichnet, daß der Baustoff des Tischplattenunterteils (19) folgende Zusammensetzung aufweist:
   a) 26,4 Gew.-% Blähton der Korngröße 4 bis 8 mm
   b) 29,3 Gew.-% Blähton der Korngröße 0 bis 4 mm
   c) 28,9 Gew.-% Portlandzement 450 F DIN 1164
   d) 15,4 Gew.-% Wasser.
3. Grilltisch nach Anspruch 1 oder 2, dadurch gekennzeichnet, daß die Keramikplatten (13) aus einer Keramikmasse folgender Zusammensetzung bestehen:
   a) 62,6 Gew.-% Schamotte, 0 bis 1 mm Körnung

b) 4,8 Gew.-% Tonerde calciniert

c) 16,3 Gew.-% Walmeroder Ton, fein gemahlen

d) 16,3 Gew.-% geschlämmter Kaolin.

4. Grilltisch nach mindestens einem der Ansprüche 1 bis 3, dadurch gekennzeichnet, daß die Keramikplatten (13) auf dem Tischplattenunterteil (19) aufgeklebt sind.

5. Grilltisch nach mindestens einem der Ansprüche 1 bis 4, dadurch gekennzeichnet, daß die Fugen (29) zwischen den Keramikplatten (13) mit einer Füllmasse ausgefüllt sind, die etwa folgende Zusammensetzung aufweist:

2 Gewichtsteile Portlandzement

1 Gewichtsteil Schmelzzement

3 Gewichtsteile Wasser und

1 Gewichtsteil bauchemische Emulsion.

6. Grilltisch nach mindestens einem der Ansprüche 1 bis 5, dadurch gekennzeichnet, daß für die zentrale Bohrung der Tischplatte (18) eine Abdeckplatte (12) vorgesehen ist, und die Abdeckplatte (12) aus demselben Keramikwerkstoff wie die Keramikplatten (13) besteht.

7. Grilltisch nach mindestens einem der Ansprüche 1 bis 6, dadurch gekennzeichnet, daß das als Hohlzylinder ausgebildete Tischbein aus mehreren zentrisch aufeinandergesetzten Ringen (26, 27, 42) aufgebaut ist.

8. Grilltisch nach Anspruch 7, dadurch gekennzeichnet, daß ein Ring (42) des Tischbeins mehrere über seinen Umfang verteilte Durchbrechungen (45) aufweist.

9. Grilltisch nach Anspruch 7 oder 8, dadurch gekennzeichnet, daß die Ringe (26, 27) aus Beton bestehen.

## Revendications

1. Table de gril comprenant un pied de table central constitué sous forme d'un cylindre creux et une plaque formant la table, de préférence ronde et disposée sur le rebord supérieur du cylindre creux, laquelle plaque comprend un alésage central par lequel on peut introduire un dispositif de gril pénétrant dans l'espace interne du pied de la table et comportant un pot à cendre, une grille à feu et une grille de gril, et la table de gril étant constituée par une partie inférieure et une plaque en céramique fixée sur cette partie inférieure, caractérisée en ce que la partie inférieure (19) de la plaque formant la table est constituée par un matériau dont la composition est la suivante:

a) de 50 à 58% environ en poids d'argile expansée de granulométrie variable comprise entre 0 et environ 8 mm,

b) de 26 à 30% en poids de ciment, et

c) de 13 à 18% en poids d'eau,

et en ce que les plaques de céramique (13) sont constituées par une masse de céramique ayant la composition suivante:

a) de 45 à 65% en poids d'argile réfractaire ou chamotte, de granulométrie comprise entre 0 et 1 mm,

b) de 0 à 6% en poids d'alumine, calcinée,

c) de 10 à 20% en poids d'argile de Walmerode, finement moulue,

d) de 10 à 20% en poids de kaolin débourbé,

e) de 0 à 1,5% en poids de liquide.

2. Table de gril selon la revendication 1, caractérisée en ce que le matériau de la partie inférieure (19) de la plaque constituant la table a la composition suivante:

a) 26,4% en poids d'argile expansée de granulométrie comprise entre 4 et 8 mm

b) 29,3% en poids d'argile expansée de granulométrie comprise entre 0 et 4 mm.

c) 28,9% en poids de ciment de Portland 450 F DIN 1164

d) 15,4% en poids d'eau.

3. Table de gril selon la revendication 1 ou 2, caractérisée en ce que les plaques de céramique (13) sont constituées par une masse de céramique de composition suivante:

a) 62,6% d'argile réfractaire de granulométrie comprise entre 0 et 1 mm

b) 4,8% en poids d'argile calcinée

c) 16,3% en poids d'argile de Walmerode, finement moulue

d) 16,3% en poids de kaolin ébourbé.

4. Table de gril selon au moins l'une des revendications 1 à 3, caractérisée en ce que les plaques de céramique (13) sont collées sur la partie inférieure (19) de la plaque formant la table.

5. Table de gril selon au moins l'une des revendications 1 à 4, caractérisée en ce que les joints (29) entre les plaques de céramique (13) sont remplis par une masse de remplissage ayant approximativement la composition suivante:

2 parties en poids de ciment de Portland,

1 partie en poids de ciment alumineux,

3 parties en poids d'eau, et

1 partie en poids d'émulsion de constitution chimique.

# 0 005 699

6. Table de gril selon au moins l'une des revendications 1 à 5, caractérisée en ce qu'une plaque de recouvrement (12) est prévue pour l'alésage central de la plaque (18) formant la table, et en ce que la plaque de recouvrement (12) est constituée par le même matériau de céramique que les plaques de céramique (13).

7. Table de gril selon au moins l'une des revendications 1 à 6, caractérisée en ce que le pied constitué sous forme d'un cylindre creux est formé par plusieurs anneaux (26, 27, 42) disposés centralement les uns au-dessus des autres.

8. Table de gril selon la revendication 7, caractérisée en ce qu'un anneau (42) du pied comprend plusieurs ouvertures (45) réparties sur sa périphérie.

9. Table de gril selon la revendication 7 ou 8, caractérisée en ce que les anneaux (26, 27) sont constitués en béton.

## Claims

1. Grilling table with a central table leg formed as a hollow cylinder and, resting on the upper edge of the hollow cylinder, a preferably round table plate, which has a central bore into which a grilling unit extending into the space within the table leg may be inserted with an ash container, a fire grid and a grill grid and which comprises a table plate lower portion and ceramic plates secured to this table plate lower portion, characterised in that the table plate lower portion (19) comprises a material of the following composition:
a) about 50 to 58% by weight expanded clay having a variable grain size between 0 and about 8 mm,
b) 26 to 30% by weight cement and
c) 13 to 18% by weight water
and that the ceramic plates (13) comprise a ceramic material of the following composition:
a) 45 to 65% by weight fire clay, 0 to 1 mm grain size
b) 0 to 6% by weight alumina, calcinated
c) 10 to 20% by weight Walmeroder clay, finely ground
d) 10 to 20% by weight cleaned kaolin
e) 0 to 1.5% by weight flowing agent.

2. Grilling table as claimed in Claim 1 characterised in that the material of the table plate lower portion (19) has the following composition:
a) 26.4% by weight expanded clay of grain size 4 to 8 mm
b) 29.3% by weight expanded clay of grain size 0 to 4 mm
c) 28.9% by weight Portland cement 450 F DIN 1164
d) 15.4% by weight water.

3. Grilling table as claimed in Claim 1 or 2 characterised in that the ceramic plates (13) comprise a ceramic material of the following composition:
a) 62.6% by weight fire clay, 0 to 1 mm grain size
b) 4.8% by weight alumina, calcinated
c) 16.3% by weight Walmeroder clay, finely ground
d) 16.3% cleaned kaolin.

4. Grilling table as claimed in at least one of Claims 1 to 3 characterised in that the ceramic plates (13) are secured to the table plate lower portion (19) with adhesive.

5. Grilling table as claimed in at least one of Claims 1 to 4 characterised in that the joints (29) between the ceramic plates (13) are filled with a filler which has approximately the following composition:
2 parts by weight Portland cement
1 part by weight aluminous cement
3 parts by weight water and
1 part by weight common chemical emulsion.

6. Grilling table as claimed in at least one of Claims 1 to 5 characterised in that a cover plate (12) is provided for the central bore in the table plate (18) and the cover plate (12) comprises the same material as the ceramic plates (13).

7. Grilling table as claimed in at least one of Claims 1 to 6 characterised in that the table leg constructed as a hollow cylinder is built up from a plurality of centrally superposed rings (26, 27, 42).

8. Grilling table as claimed in Claim 7 characterised in that a ring (42) of the table leg has a plurality of apertures (45) distributed over its periphery.

9. Grilling table as claimed in Claim 7 or 8 characterised in that the rings (26, 27) comprise concrete.

0 005 699

Fig.1

Fig.2

1

0 005 699

Fig.3b

Fig.3a

Fig.4

2

0 005 699

Fig.5

Fig.6b

Fig.7b

Fig.6a

Fig.7a

3